Europäisches Patentamt

European Patent Office

Office européen des brevets

(19)

(11) Veröffentlichungsnummer: **0 002 820**
**B1**

(12) **EUROPÄISCHE PATENTSCHRIFT**

(45) Veröffentlichungstag der Patentschrift: **26.05.82**

(51) Int. Cl.³: **C 08 F 6/24,** B 01 D 3/38

(21) Anmeldenummer: **78101822.1**

(22) Anmeldetag: **22.12.78**

(54) Verfahren zur Verringerung des Monomergehaltes in scherkraftempfindlichen und/oder temperaturempfindlichen Polymerdispersionen.

(30) Priorität: **22.12.77 DE 2757168**

(43) Veröffentlichungstag der Anmeldung:
**11.07.79 Patentblatt 79/14**

(45) Bekanntmachung des Hinweises auf die Patenterteilung:
**26.05.82 Patentblatt 82/21**

(84) Benannte Vertragsstaaten:
**BE DE FR GB NL SE**

(56) Entgegenhaltungen:
**BE - A - 829 834**
**FR - A - 2 283 153**
**FR - A - 2 303 031**
**FR - A - 2 308 644**

(73) Patentinhaber: **WACKER-CHEMIE GMBH**
**Prinzregentenstrasse 22**
**D-8000 München 22 (DE)**

(72) Erfinder: **Engel, Frank, Dr.**
**Johannes-Dech-Strasse 26**
**D-5000 Köln 60 (DE)**
Erfinder: **Nettesheim, Gottfried, Dr.**
**Habichtweg 2**
**D-5024 Pulheim (DE)**

Courier Press, Leamington Spa, England.

Verfahren zur Verringerung des Monomergehaltes in scherkraftempfindlichen
und/oder temperaturempfindlichen Polymerdispersionen

Polymerisate des Vinylchlorids enthalten üblicherweise nach dem Polymerisationsschritt noch monomeres Vinylchlorid. Zur Entfernung dieses monomeren Vinylchlorids aus wäßrigen Polymerdispersionen wurden verschiedene Verfahren angegeben. So wird in der DE—A 26 35 478 vorgeschlagen, Vinylchlorid aus wäßrigen Dispersionen, Latices oder Aufschlämmungen dadurch zu entfernen, daß man organische oder anorganische gasförmige Stoffe und/oder organische Flüssigkeiten, in denen Vinylchlorid zumindest mäßig löslich ist, durchbläst. Während dieses Durchblaseverfahrens wird der Druck im Entgasungsgefäß unterhalb Atmosphärendruck gehalten.

Andere Anmeldungen geben die Lehre, bei vermindertem Druck im Entgasungsgefäß mit heißem, gesättigtem oder ungesättigtem Wasserdampf, jedoch immer mit Wasserdampf über Atmosphärendruck die Monomerentfernung durchzuführen.

Alle bisher bekanntgewordenen Verfahrensweisen eignen sich jedoch nicht zur Entgasung scherkraftempfindlicher bzw. temperaturempfindlicher Polymerdispersionen. Solche Polymerdispersionen sind im allgemeinen solche mit Teilchengrößen zwischen 0,1 und 20 $\mu$m, die im allgemeinen keine Schutzkolloide und nur geringe Mengen an Emulgatoren enthalten.

Aufgabe der Erfindung war es somit, ein Verfahren zur Verringerung des Monomergehaltes scherkraftempfindlicher und/oder temperaturempfindlicher wäßriger Polymerdispersionen zu finden.

Gegenstand der Erfindung ist ein Verfahren zur Verringerung des Monomergehaltes scherkraftempfindlicher und/oder temperaturempfindlicher wäßriger Polymerdispersionen mit Teilchengrößen zwischen 0,1 und 20 $\mu$m, die mindestens 75 Gew.% Vinylchlorid einpolymerisiert enthalten, in Gegenwart von 0,001 bis 1 Gew.% Emulgatoren, bezogen auf den Feststoffgehalt der Dispersion, durch Behandeln der Polymerdispersion mit Wasserdampf, dadurch gekennzeichnet, daß Wasserdampf mit einer Temperatur zwischen 50 und 100° C, vorzugsweise 60 bis 80° C und einem Druck zwischen 0,1 und 0,9 bar, vorzugsweise 0,2 bis 0,7 bar, während einer Zeit von 20 Minuten bis 3 Stunden in einer Menge von 0,05 bis 0,25 kg pro Liter Dispersion in die Dispersion eingeleitet wird und gleichzeitig im Entgasungsgefäß ein höchstens dem Wasserdampfpartialdruck bei der Entgasungstemperatur entsprechender Innendruck herrscht.

Eine vorteilhafte Verfahrensweise der Verringerung des Monomergehaltes besteht darin, daß die zugeführte Dampfmenge pro Zeiteinheit gegen Ende des Entgasungsschrittes größer ist als zu Beginn. Die Temperatur der Dispersion soll während der Entgasung 80° C nicht überschreiten, im allgemeinen wird bei Temperaturen über 40° C gearbeitet. Dem Wasserdampf können eines oder mehrere Inertgase zugesetzt werden, wobei die Summe der Partialdrucke 0,1 bis 0,9, vorzugsweise 0,3 bis 0,7 bar, betragen.

Überraschenderweise wird es möglich, durch die Zugabe von gesättigtem, ungesättigtem oder überhitztem Wasserdampf mit Temperaturen zwischen 50 und 100° C, vorzugsweise 60 bis 80° C, mit einem Druck zwischen 0,1 und 0,9 bar, vorzugsweise 0,2 bis 0,7 bar, bei gleichzeitigem Anlegen von Unterdruck an das Entgasungsgefäß die Monomererniedrigung vorzunehmen, ohne daß Koagulation der scherempfindlichen bzw. temperaturempfindlichen Latices eintritt.

Unter Polymerdispersionen werden Latices verstanden, die Feststoffgehalte zwischen 20 und 50 Gew.% aufweisen. Der Teilchendurchmesser dieser Laticesteilchen kann in weiten Bereichen schwanken, im allgemeinen werden jedoch die Stabilitätsschwierigkeiten, insbesondere bei Latices, beobachtet, die eine Teilchengröße zwischen 0,1 und 20 $\mu$m aufweisen. Der Polymerisatanteil kann vollständig aus Vinylchlorideinheiten aufgebaut sein, es ist aber auch denkbar, daß neben minimal 75 Gew.% Vinylchlorideinheiten auch noch andere, mischpolymerisierbare Monomereinheiten zugegen sind. Bevorzugt als mit Vinylchlorid mischpolymerisierbare Monomere sind solche, welche nur eine polymerisierbare Gruppe, und zwar die Gruppe —CH=C< enthalten. Als Beispiel hierfür seien genannt: Vinylbromid, Vinylidenchlorid, Vinylester mit organischen Säuren, wie Vinylformiat, Vinylacetat und Vinylbenzoat, Acrylverbindungen, wie Methylacrylat, Methylmethacrylat, sowie ungesättigte Dicarbonsäuren, wie Maleinsäure, Fumarsäure, Methylenmalonsäure, Itaconsäure, Citraconsäure oder Tetrahydrophthalsäure, sowie die Mono- und Diester dieser Säuren, wie Maleinsäuredimethyl-, -diäthylester und -di-n-butylester, Maleinsäuremono-(2-äthylhexyl-)ester, Fumarsäuredimethylester, -diäthylester, -di-n-butylester, -di-(2-äthylexyl-)ester und -dilaurylester. Verwendbar sind selbstverständlich auch Gemische aus mehr als 2 Monomeren.

Als Dispergiermittel können ionogene und/oder nichtionogene Emulgatoren und/oder Schutzkolloide angewendet werden. Als ionogene Emulgatoren werden jeweils vorzugsweise anionaktive Emulgatoren angewandt. Als Beispiele seien gennant: Alkali- und insbesondere Ammoniumsalze von Fettsäuren, wie Laurin- oder Palmitinsäure, der sauren Phosphorsäurealkylester, wie diäthylhexylphosphorsaures Natrium, der sauren Fettalkoholschwefelsäureester, der Paraffinsulfosäuren, der Alkylnaphthalinsulfosäuren und der Sulfobernsteinsäuredialkylester. Sehr gut eigen sich auch Alkali- und Ammoniumsalze von epoxygruppenhaltigen Fettsäuren, wie Ammoniumepoxystearat, bzw. die Alkali- und Ammoniumsalze der Produkte, die durch Umsetzung von Persäuren, z.B. Peressigsäure, mit ungesättigten Fettsäuren, z.B. Öl- oder Linolsäure, unter Bildung von etwa Dioxystearinsäure und Oxyacetoxystearinsäure, erhältlich sind, sowie die Alkali- und Ammoniumsalze der Umsetzungsprodukte

2

**0 002 820**

von Persäuren mit ungesättigten Oxyfettsäuren, wie Rhizinolsäure. Es können aber auch kationaktive Emulgatoren, wie Laurylpyridiniumhydrochlorid, verwendet werden.

Als Beispiele für nichtionogene Emulgatoren seien Teilfettsäureester mehrwertiger Alkohole, wie Glycerinmonostearat. Sorbitmonolaurat oder -palmitat, Teilfettalkohoäther mehrwertiger Alkohole genannt. Polyoxyäthylenäther von Fettalkoholen oder aromatischen Hydroxyverbindungen sowie die bekannten Polypropylenoxyd-Polyäthylenoxyd-Kondensationsprodukte kommen in Frage.

Die Menge der ionogenen oder nichtionogenen Emulgatoren beträgt insgesamt 0,001 bis 1 Gew.%, bezogen auf das Gewicht des oder der Monomeren.

Die ebenfalls als Dispergiermittel verwendbaren Schutzkolloide sind natürliche oder synthetische Polymerisate, die üblicherweise bei der Suspensionspolymerisation als Schutzkolloide zum Einstaz gelangen. Als Beispiele hierfür seien Polyvinylalkohol, der ggf. noch bis zu 40 Mol.% Acetylgruppen enthält, Gelatine und Cellulosederivate, wie wasserlösliche Methylcellulose, Carboxymethylcellulose, Hydroxyäthylcellulose, sowie Mischpolymerisate von Maleinsäure bzw. deren Halbestern mit Styrol genannt. Die Schutzkolloide werden in Mengen von 0,1 bis 3 Gew.%, vorzugsweise 0,3 bis 2 Gew.%, bezogen auf das Gewicht des oder der Monomeren, verwendet. Die Polymerisation erfolgt in üblicher Weise mit Hilfe von monomerlöslichen, Radikale bildenden Katalysatoren.

Als Beispiele für monomerlösliche Polymerisationskatalysatoren seien Benzoyl-, Lauroyl-, 2,4-Dichlorbenzoylperoxyd oder Azoisobuttersäuredinitril, Dialkylperoxydicarbonate sowie Acetylcyclohexansulfonylperoxyd genannt. Diese monomerlöslichen Katalysatoren werden vorzugsweise in Mengen von 0,01 bis 5 Gew.%, zweckmäßigerweise 0,05 bis 1 Gew.%, bezogen auf das Gewicht des oder der Monomeren eingesetzt.

Übliche Polymerisations-Hilfsstoffe außer den bisher genannten, wie Teilchen- und Molekülgrößenregler, können mitverwendet werden. Das Mengenverhältnis von Wasser zu dem zu polymerisierenden Monomeren ist nicht entscheidend.

Der pH-Wert des Polymerisationsansatzes liegt vorzugsweise bei 4 bis 10, die Polymerisationstemperatur vorzugsweise bei etwa 30 bis 80° C. Da es sich im allgemeinen um scherkraftempfindliche Polymerdispersionen handelt, wird zu heftiges Rühren während der Polymerisation ausgeschlossen.

Die zu entgasenden Polymerdispersionen werden nach Beendigung der Polymerisation in ein Entgasungsgefäß übergeführt. Danach wird im Gasraum über dem Polymerlatex Unterdruck durch Vakuumpumpen erzeugt. Dabei stellt sich ein Innendruck entsprechend dem Wasserdampfpartialdruck bei der Temperatur der Dispersion ein. Sodann wird mit dem Einleiten von gesättigtem, ungesättigtem oder überhitztem Wasserdampf mit Temperaturen zwischen 50 und 100° C, vorzugsweise 60 bis 80° C, und einem Druck zwischen 0,1 und 0,9 bar, vorzugsweise 0,2 bis 0,7 bar, begonnen. Selbstverständlich wird der zur Monomerentfernung eingeleitete Wasserdampf nur dann in das Entgasungsgefäß eingesaugt werden können, wenn der Innendruck im Entgasungsgefäß einen zumindest neidrigeren Druck aufweist als der einzusaugende Wasserdampf. Wasserdampf der genannten Spezifikation kann beispielsweise durch Dampfwandler aus heißerem und/oder unter höherem Druck stehendem Wasserdampf bereitet werden. Die erfindungsgemäße Behandlung der Polymerlatices mit Wasserdampf der genannten Spezifikation in Entgasungsgefäßen, deren Innendruck geringer ist als der Atmosphärendruck erstreckt sich über einen Zeitraum von 20 Minuten bis 3 Stunden. Nach diesem Zeitraum ist im allgemeinen restliches monomeres Vinylchlorid auf Werte unterhalb 40 ppm reduziert. Für diesen Entgasungsschritt sind Dampfmengen von 0,05 bis 0,25 kg Wasserdampf pro Liter Dispersion notwendig. Die Wasserdampfeinleitung kann in der Weise geschehen, daß im allgemeinen keine bzw. nur eine geringfügige Volumenzunahme der Polymerdispersion eintritt. Bei erfindungsgemäßer Verfahrensweise kann der Entgasungsprozeß so gesteuert werden, daß eine Erwärmung der Dispersion auf Temperaturen über 80° C hinaus nicht eintritt. Ublicherweise wird man jedoch bei Temperaturen über 40° C arbeiten, da sonst der Entgasungsschritt zeitlich aufwendig wird. Die Temperatur der Polymerdispersion kann durch die Menge und die Temperatur des eingeleiteten Dampfes festgelegt werden. In einer weiteren Ausführungsform der Verfahrens wird die Regelung der Temperatur des Polymerlatex extern durch Zufuhr oder Abfuhr von Wärme vorgenommen, um die Menge des eingeleiteten Dampfes, die einen wesentlichen Einfluß auf die Effizienz des Verfahrens ausübt, innerhalb weiter Grenzen variieren zu können.

### Beispiel 1

Nach dem Polymerisationsschritt liegen 4 Liter eines durch Mikrosuspensionspolymerisation von Vinylchlorid hergestellten Latex in einem temperierbaren Zylindergefäß von 150 mm Durchmesser und 400 mm Höhe, das auch mit einem Propellerrührer ausgestattet ist, bei einem Druck von 200 mbar und 60° C vor. Innerhalb von 2 Stunden werden 0,10 kg Dampf pro Liter Latex durchgeleitet. Der Dampf hat eine Temperatur von 63°C und einen Druck von 226 mbar. Während der gesamten Entgasungszeit wird der Unterdruck von 200 mbar im Entgasungsgefäß aufrechterhalten. Der anfängliche Monomergehalt von 1.360 ppm ist nach einer Stunde auf 10 %, nach 2 Stunden auf unter 40 ppm reduziert. Es tritt keine Koagulation ein.

### Beispiel 2

Es wird nach dem Verfahren von Beispiel 1 mit einer Verminderung der Dampfmenge auf 0,045 kg Dampf pro Liter Latex gearbeitet. Der anfängliche Monomergehalt von 1.090 ppm ist in diesem Fall nach einer Stunde auf 49 % und nach 2 Stunden auf 38 % reduziert.

Vergleichsbeispiel

Es wird nach dem Verfahren von Beispiel 1, jedoch ohne Dampfdurchleitung, gearbeitet. Der anfängliche Monomergehalt von 1.160 ppm ist nach einer Stunde auf lediglich 82 % und nach 2 Stunden auf lediglich 68 % des anfänglichen Monomergehaltes reduziert.

**Patentansprüche**

1. Verfahren zur Verringerung des Monomergehaltes scherkraftempfindlicher und/oder temperaturempfindlicher wäßriger Polymerdispersionen mit Teilchengrößen zwischen 0,1 und 20 $\mu$m, die mindestens 75 Gew.% Vinylchlorid einpolymerisiert enthalten, in Gegenwart von 0,001 bis 1 Gew.% Emulgatoren, bezogen auf Feststoffgehalt der Dispersion, durch Behandeln der Polymerdispersion mit Wasserdampf, dadurch gekennzeichnet, daß Wasserdampf mit einer Temperatur zwischen 50 und 100° C, vorzugsweise 60 bis 80° C und einem Druck zwischen 0,1 und 0,9 bar, vorzugsweise 0,2 bis 0,7 bar, während einer Zeit von 20 Minuten bis 3 Stunden in einer Menge von 0,05 bis 0,25 kg pro Liter Dispersion in die Dispersion eingeleitet wird und gleichzeitig im Entgasungsgefäß ein höchstens dem Wasserdampfpartialdruck bei der Entgasungstemperatur entsprechender Innendruck herrscht.

2. Verfahren nach Anspruch 1, dadurch gekennzeichnet, daß die zugeführte Dampfmenge pro Zeiteinheit gegen Ende des Entgasungsschrittes größer ist als zu Beginn.

**Claims**

1. Process for decreasing the monomer content of shearing-force-sensitive and/or thermosensitive aqueous polymer dispersions that have particle sizes of between 0.1 and 20 $\mu$m and that contain at least 75% by weight of vinyl chloride incorporated by polymerisation, in the presence of from 0.001 to 1% by weight of emulsifiers, calculated on the solids content of the dispersion, by treating the polymer dispersion with water vapour, characterised in that water vapour having a temperature of between 50 and 100°C, preferably from 60 to 80°C, and a pressure of between 0.1 and 0.9 bar, preferably from 0.2 to 0.7 bar, is supplied to the dispersion for a period of from 20 minutes to 3 hours in an amount of from 0.05 to 0.25 kg per litre of dispersion, and at the same time the internal pressure in the degasification vessel does not exceed the partial pressure of the water vapour at the degasification temperature.

2. Process according to claim 1, characterised in that the amount of vapour added per unit of time is greater towards the end of the degasification stage than at the beginning thereof.

**Revendications**

1. Procédé pour abaisser la teneur en monomère de dispersions aqueuses de polymères sensibles aux forces de cisaillement et/ou à la température, ayant des tailles de particules comprises entre 0,1 et 20 $\mu$m, qui contiennent au moins 75% en poids de chlorure de vinyle à l'état polymérisé, en présence de 0,001 à 1% en poids d'émulsionnants par rapport à la teneur en matières solides de la dispersion, par traitement de la dispersion de polymère par de la vapeur d'eau, procédé caractérisé en ce qu'on introduit dans la dispersion de la vapeur d'eau ayant une température comprise entre 50 et 100°C, de préférence entre 60 et 80°C, et ayant une pression comprise entre 10 et 90 kPa, de préférence entre 20 et 70 kPa, pendant une durée de 20 minutes à 3 heures, à raison de 0,05 à 0,25 kg par litre de dispersion, alors qu'il règne simultanément dans le récipient de dégazage une pression interne au plus égale à la pression partielle de la vapeur d'eau à la température de dégazage.

2. Procédé suivant la revendication 1, caractérisé en ce que la quantité de vapeur introduite par unité de temps est plus élevée vers la fin de l'étape de dégazage qu'au début de celle-ci.